# FASCICULE DE BREVET EUROPEEN

(11) **EP 3 554 858 B1**
(45) Date de publication et mention de la délivrance du brevet: **18.11.2020**
(21) Numéro de dépôt: 17822419.2
(22) Date de dépôt: 14.12.2017
(51) Int. Cl.: B60C 19/08, B60C 9/20

(54) **PNEU RENDU CONDUCTEUR PAR MISE EN PLACE D'UNE BANDELETTE CONDUCTRICE LOCALISÉE**
REIFEN, DER DURCH ANORDNUNG EINES LOKALISIERTEN LEITFÄHIGEN BANDES LEITFÄHIG GEMACHT WIRD
TYRE MADE CONDUCTIVE BY ARRANGING A LOCALIZED CONDUCTIVE STRIP

(30) Priorité: 16.12.2016 FR 1662620
(43) Date de publication de la demande: 23.10.2019
(73) Titulaire: Compagnie Générale des Etablissements Michelin, 63000 Clermont-Ferrand (FR)
(72) Inventeur: CAMBON, Stéphanie, 63040 Clermont-Ferrand Cedex 9 (FR)
(74) Mandataire: Millanvois, Patrick Jacques Jean
(86) Numéro de dépôt international: PCT/FR2017/053562
(87) Numéro de publication internationale: WO 2018/109394

(56) Documents cités:
- EP-A1- 1 659 005
- WO-A1-2009/127323
- JP-A- 2009 154 608
- US-A1- 2014 174 612

## Description

### DOMAINE DE L'INVENTION

Le domaine de l'invention concerne les pneus destinés à être montés sur des véhicules de transport de type poids lourd. Plus particulièrement, l'invention traite du problème de l'écoulement et l'élimination des charges électriques emmagasinées dans des pneus, ces pneus comportant des matériaux élastomériques très faiblement conducteurs de l'électricité.

### ÉTAT DE LA TECHNIQUE

### Définitions :

Dans le cadre de cette demande, il faut entendre par matériau très faiblement conducteur de l'électricité un matériau présentant une résistivité supérieure ou égale à 10⁸ Ohms/cm. De même, on entend par matériau conducteur de l'électricité un matériau présentant une résistivité inférieure à 10⁶ Ohms/cm. Ces matériaux ont les propriétés élastiques appropriées.

Dans la présente description, on utilise les termes radial ou radialement pour indiquer une direction qui, lorsqu'elle est prise sur le pneu, est une direction perpendiculaire à l'axe de rotation du pneu tandis que, lorsqu'elle est prise sur une bande de roulement seule, elle correspond à la direction de l'épaisseur de ladite bande.

Par ailleurs, on utilise le terme circonférentiel pour indiquer une direction qui, correspond à une direction tangente à tout cercle centré sur l'axe de rotation du pneu. Cette même direction correspond à la direction longitudinale de la bande de roulement celle-ci étant formée à la manière d'une bande plane avant incorporation à la fabrication d'un pneu.

Un pneu est formé d'un sommet relié par des flancs à des bourrelets, ces bourrelets étant prévus pour être en contact avec une jante de montage. Le pneu comprend dans sa structure une armature de carcasse formée d'une pluralité de renforts s'étendant d'un bourrelet à l'autre et assurant le renforcement des flancs et du sommet. En outre, le sommet du pneu comprend une armature de sommet laquelle est surmontée radialement à l'extérieur par une bande de roulement destinée à venir en contact avec la route et à s'user pendant le roulage du pneu.

L'armature de sommet peut être formée d'une pluralité de couches de matériau élastomérique, chaque couche étant renforcée par des renforts comme des câbles de diverses natures : métallique, textile. La fabrication d'un pneu s'opère le plus souvent par la superposition des différentes couches formant chacune un élément de la structure du pneu, chaque couche étant enroulée dans la direction circonférentielle et présentant des extrémités. Ces extrémités peuvent être mises bout à bout ou superposées l'une sur l'autre pour former une région d'aboutage.

Il en est de même pour l'armature de carcasse qui s'étend d'un bourrelet à l'autre. Cette armature de carcasse comprend une pluralité de renforts disposés de manière à ce que chaque renfort soit contenu dans un plan radial (plan contenant l'axe de rotation). Cette armature de carcasse est posée en fabrication sur un cylindre, les renforts de l'armature étant orientés parallèlement à l'axe du cylindre. Cette armature comprend deux extrémités dans la direction circonférentielle sur ce cylindre de fabrication, la tenue mécanique de l'armature étant réalisée en opérant une superposition de ces deux extrémités sur quelques renforts.

La cohésion de l'ensemble des constituants et couches est obtenue par une opération finale de moulage et de vulcanisation des matériaux élastomériques réalisée dans un moule. Ce moule confère au pneu un aspect externe comprenant outre les marquages, un dessin de sculpture de sa bande de roulement.

Dans le but d'abaisser la résistance au roulement des pneus et en conséquence de réduire la consommation de carburant des véhicules, les matériaux élastomériques constituant les pneus sont choisis parmi des matériaux élastomériques faiblement hystérétiques limitant les pertes d'énergie lors des cycles de sollicitation résultant du roulage. Ces matériaux faiblement hystérétiques sont soit des matériaux faiblement chargés en noir de carbone soit des matériaux comprenant à titre de charge majoritaire des charges non conductrices de l'électricité telles que la silice. Ces caractéristiques ont pour conséquence une réduction très sensible de la conduction des charges électriques, lesquelles peuvent s'accumuler dans le pneu avec tous les inconvénients que cela peut générer.

L'usage de matériaux ayant des niveaux de pertes hystérétiques faibles s'est largement développé pour la réalisation de bandes de roulement compte tenu des avantages procurés par de tels matériaux pour améliorer également les performances suivantes : adhérence sur sol sec ou sur sol humide ou verglacé, résistance à l'usure, bruit émis en roulage. Un pneu de ce type est décrit à titre illustratif dans le brevet européen EP 0501227 B1.

Toutefois la mise en œuvre de ces mélanges génère un problème lié à l'accumulation d'électricité statique lors du roulage du véhicule dès lors qu'il n'y a pas de chemin d'écoulement des charges accumulées du pneu vers la chaussée. Cette absence de chemin résulte de la très grande résistivité des matériaux constituant la bande de roulement. L'électricité statique ainsi accumulée dans un pneu est susceptible de provoquer, lorsque certaines conditions particulières sont réunies, un choc électrique ressenti par l'occupant du véhicule, lorsque cet occupant est amené à toucher la carrosserie du véhicule. Cette électricité statique est, en outre, susceptible de hâter le vieillissement du pneu en raison de la présence d'ozone généré par la décharge électrique. En fonction de la nature de la chaussée et du véhicule, l'électricité statique non évacuée peut également être à l'origine d'un mauvais fonctionnement des dispositifs électroniques embarqués dans le véhicule en raison des interférences générées.

Ce problème a suscité une attention toute particulière et de nombreux travaux ont conduit à diverses solutions permettant un écoulement des charges électriques du pneu vers la chaussée.

Une solution est notamment exposée dans le brevet EP 0658452 B1 et selon laquelle il est ajouté au moins un insert de matériau conducteur préférentiellement sur toute la circonférence du pneu et dans l'épaisseur de la bande de roulement, cet insert reliant la surface externe de la bande de roulement soit à l'armature de sommet, soit à l'armature de carcasse, soit à tout autre partie attenante à la bande de roulement du pneu suffisamment conductrice de l'électricité...

Selon cette solution, on relie la surface externe de la bande de roulement à une partie du pneu qui lui est juste adjacente et qui est conductrice, telle que le flanc, l'armature de renfort sommet ou l'armature de carcasse. Les charges électriques sont évacuées vers le sol depuis la jante, cette dernière étant reliée au véhicule, et passent au travers des bourrelets qui sont en contact avec la jante, puis cheminent dans les flancs au travers des matériaux constitutifs de la nappe de renfort carcasse ou des gommes de protection des flancs en direction d'une partie interne de la zone sommet, et enfin s'écoulent de la partie interne de la zone sommet vers le sol en passant par l'armature sommet et par la bande de roulement.

Le document EP1659005 B1 décrit différentes variantes de solution applicables à ce type de pneu en disposant une bandelette conductrice de faible largeur créant un chemin conducteur entre un bourrelet et un insert conducteur dans la bande de roulement. Il a été constaté que cette dernière solution est tout à fait efficace pour résoudre le problème lié à l'accumulation de charges électriques dans le pneu. Cependant, l'ajout de cette bandelette conductrice de faible largeur crée une irrégularité d'épaisseur dans le pneu conduisant à une non-uniformité du pneu, cette non-uniformité pouvant être à l'origine du développement d'une usure anormale ou usure irrégulière du pneu. Par non uniformité, on entend une irrégularité au tour de roue pouvant générer une variation locale d'épaisseur, de largeur, de rigidité se traduisant en roulage par des vibrations. Par usure irrégulière on entend une usure qui tend à s'amplifier sur certaines régions de la bande de roulement au détriment des autres régions. Ces usures irrégulières sont également facteur de vibrations en roulage et peuvent conduire à un retrait prématuré du pneu. Une usure régulière est définie comme une usure qui affecte de manière homogène toute la largeur d'une bande de roulement et ceci sur toute sa circonférence. C'est ce type d'usure qui est recherché pour les pneus de poids lourd a contrario d'une usure irrégulière.

Les pneus de poids-lourd sont particulièrement sensibles à la qualité de leur fabrication et des critères d'uniformité comme le balourd statique et le faux-rond sont très contrôlés. Une dissymétrie de répartition de masse d'un pneu liée à l'accumulation dans une même région de plusieurs soudures de ses composants crée un déséquilibre de type balourd à l'origine d'une possible usure anormale ou irrégulière. L'existence de régions de soudure ou de superposition des extrémités des composants génère des vibrations dont on a constaté qu'elles sont aussi liées à l'apparition d'usure irrégulière.

La présente invention vise à résoudre ce problème pouvant survenir lors de l'adjonction d'une bandelette conductrice localisée servant à conduire les charges électriques ne pouvant s'écouler du véhicule vers la chaussée du fait de l'usage de matériaux particulièrement non conducteurs de l'électricité.

L'invention ici décrite propose ainsi une amélioration de l'architecture proposée dans EP1659005 B1 réduisant le risque d'usure irrégulière liée à la présence d'au moins une bandelette conductrice s'étendant dans au moins un flanc.

### BREF EXPOSE DE L'INVENTION

Le pneu selon l'invention est destiné à être monté sur une roue et comprend :
- une zone de sommet comprenant une armature de sommet surmontée radialement à l'extérieur par une bande de roulement, cette bande de roulement ayant une surface extérieure, dite surface de roulement, destinée à venir en contact avec la chaussée, cette bande de roulement étant formée dans au moins un matériau non conducteur de l'électricité et comprenant des moyens conducteurs pour assurer la conduction de l'électricité dans toute l'épaisseur de la bande de roulement, l'armature de sommet comprenant une pluralité de couches superposées les unes aux autres,
- deux bourrelets destinés à assurer le contact entre la roue et le pneu, la partie des bourrelets en contact avec la roue étant conductrice de l'électricité
- des flancs destinés à assurer la liaison entre la zone sommet et les bourrelets.

L'armature de carcasse est enroulée autour d'un axe et ses extrémités sont reliées entre elles de manière à assurer une bonne tenue mécanique. Cette région de liaison créé une discontinuité qui peut perturber l'usure de la bande de roulement.

Chaque couche de l'armature de sommet est enroulée et comprend deux extrémités dans la direction circonférentielle, ces deux extrémités étant réunies entre elles dans une région d'aboutage en les aboutant l'une contre l'autre pour assurer une bonne tenue mécanique après vulcanisation.

La bande de roulement est enroulée et comprend deux extrémités dans la direction circonférentielle, ces deux extrémités étant réunies mécaniquement l'une à l'autre par le biais d'une région de soudure oblique formée dans l'épaisseur de la bande.

Cette région de soudure de la bande de roulement est décalée circonférentiellement d'un angle de 180 degrés par rapport à la région d'aboutage des extrémités de la couche radialement la plus à l'extérieur de l'armature de sommet.

La bande de roulement comprend au moins un moyen conducteur s'étendant dans toute l'épaisseur de la bande de roulement à partir de la surface de roulement de la bande de roulement.

En outre, le pneu comprend au moins une bandelette conductrice de faible épaisseur (c'est à dire au plus 2 mm) et de faible largeur réalisée dans un matériau de nature caoutchoutique conducteur de l'électricité et disposée entre la bande de roulement et l'armature de sommet, sur toute la largeur de l'armature de sommet afin de créer un chemin d'écoulement des charges électriques entre le moyen conducteur formé dans la bande de roulement et au moins soit un des flancs soit un des bourrelets.

Ce pneu est tel que cette bandelette conductrice est localisée circonférentiellement de manière à être positionnée à équidistance angulaire entre la région de soudure de la bande de roulement et la région d'aboutage de la couche de renforcement radialement la plus à l'extérieur, ces deux régions étant diamétralement opposées.

Cette disposition permet effectivement de minimiser l'impact de la présence de la bandelette conductrice sur l'uniformité du pneu et ainsi d'éviter la génération d'une usure irrégulière de la bande de roulement.

Préférentiellement, la bandelette conductrice a une épaisseur au plus égale à 1 mm.

Dans un autre mode préférentiel, la bandelette conductrice de l'électricité est disposée pour être orientée radialement et pour s'étendre sur toute la largeur de l'armature de sommet.

Dans une autre variante, la bandelette conductrice est disposée de manière oblique de part et d'autre d'une position circonférentielle à équidistance des régions de soudure de la bande de roulement et la zone de superposition de la couche de renforcement radialement la plus à l'extérieur cela afin de limiter l'impact de la présence de cette bandelette sur le passage dans le contact avec la chaussée. L'angle d'orientation de la bandelette conductrice est au plus égal à 20 degrés.

Dans un autre mode préférentiel, les flancs destinés à assurer la liaison entre la zone sommet et les bourrelets, ne sont pas conducteurs. Dans pareil cas, la bandelette conductrice est prolongée dans l'un au moins des flancs pour rejoindre les parties de bourrelet et assurer ainsi un trajet pour les charges électriques entre la jante et la chaussée.

Dans une autre variante intéressante de l'invention, la région de soudure de l'avant dernière couche de de l'armature de sommet est positionnée angulairement de manière à être située diamétralement à l'opposé de la bandelette conductrice.

Un moyen conducteur traversant la bande de roulement peut consister en au moins un insert de matériau caoutchoutique, cet insert ayant une épaisseur suffisante pour assurer la conduction des charges électriques entre le sol et la bandelette conductrice.

Dans une autre variante, l'armature de sommet comprend au moins une couche de renforts de frettage orientés dans la direction circonférentielle ou dans une direction proche de la direction circonférentielle, c'est à dire selon un angle au plus égal à 10 degrés avec la direction circonférentielle, la présence de cette couche de frettage ayant pour effet de limiter l'expansion en direction radiale du sommet du pneu lors de la mise en rotation du pneu et ainsi réduire les non uniformités pouvant être liées à la présence d'une bandelette conductrice de faible largeur.

D'autres caractéristiques et avantages de l'invention ressortent de la description faite ci-après en référence au dessin annexé qui montre, à titre d'exemple non limitatif, plusieurs formes de réalisation de l'objet de l'invention.

### BREVE DESCRIPTION DES FIGURES

La figure 1 représente une vue partielle d'un pneu selon l'invention dans lequel les flancs du pneu sont conducteurs ;
La figure 2 montre une vue locale du sommet du pneu de la figure 1 montrant la disposition de la bandelette conductrice ;
- la figure 3 représente une vue de côté du pneu de la figure 1 montrant de façon schématique les positions des soudures des principales couches de renfort, de la bande de roulement ainsi que la position de la bande conductrice.

### DESCRIPTION DES FIGURES

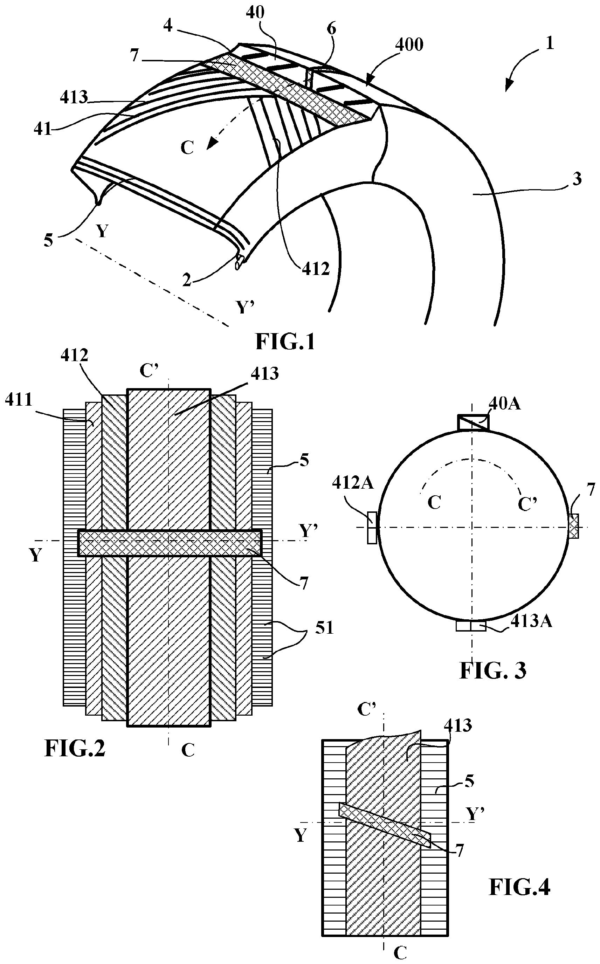

La figure 1 représente une vue partielle d'un pneu 1 de dimension 315/70R22.5 selon l'invention. Ce pneu 1 comprend des bourrelets 2 destinés à venir en contact avec une jante de montage (non représentée), ces bourrelets 2 étant prolongés par des flancs 3 conducteurs de l'électricité, ces flancs 3 se raccordant à un sommet 4. Ce pneu 1 comprend une armature de carcasse 5 s'étendant de bourrelet à bourrelet.

Le sommet 4 du pneu formé radialement à l'extérieur de l'armature de carcasse 5 comprend une armature de sommet 41 comportant deux couches de renforts dites couches de travail 411, 412, ces couches de travail étant surmontées par une couche de protection 413. Enfin l'armature de sommet 41 est coiffée radialement sur l'extérieur par une bande de roulement 40 destiné à venir en contact avec une chaussée par l'intermédiaire de sa surface de roulement 400.

Dans l'exemple décrit, les matériaux caoutchoutiques composant l'armature de sommet 41 et l'armature de carcasse 5 ne sont pas conducteurs de l'électricité. En outre la bande de roulement 40 est elle aussi formée dans un matériau peu ou non conducteur dont la charge renforçante est majoritairement de la silice.

Lors de la fabrication, chaque couche de travail 411, 412 et couche de protection 413 est posée par enroulement dans la direction circonférentielle. Chaque couche de travail et de protection comprend deux extrémités que l'on aboute l'une contre l'autre pour assurer une bonne tenue mécanique. Si on prend comme référence angulaire la région de superposition de la première couche de travail 411, la région de superposition de la deuxième couche de travail 412 est décalée de 90 degrés par rapport à cette référence angulaire tandis que la dernière couche 413 (couche de protection) est placée de façon à être diamétralement à l'opposé par rapport à cette même référence.

La bande de roulement 40 ayant une épaisseur E égale dans le cas présent à 15 mm comprend deux extrémités biseautées selon un angle moyen de 35 degrés ; ces extrémités sont destinées à venir se placer l'une contre l'autre afin de réaliser une bonne liaison mécanique. Cette superposition des extrémités biseautées est localisée à l'opposé de la région de superposition de la dernière couche 413 de l'armature de sommet.

Dans le cas présenté, les flancs ainsi que les matériaux de bourrelet sont conducteurs.

Pour assurer un chemin d'écoulement des charges dans la bande de roulement 40, il est moulé dans la bande de roulement un insert 6 conducteur traversant sur toute son épaisseur la bande de roulement entre sa surface de roulement 400 et sa surface radialement la plus à l'intérieur.

Pour réaliser un trajet de conduction électrique entre la jante de montage et la chaussée sur laquelle roule le pneu, il est placé radialement sur l'extérieur de la dernière couche de protection 413 de l'armature de sommet et sur toute la largeur axiale de cette armature de sommet une bandelette conductrice 7 formée dans un matériau conducteur, cette bandelette conductrice 7 ayant une épaisseur de 1 mm et une largeur de 25 mm.

Sur la figure 2, on a représenté dans une vue en plan la bandelette conductrice 7 qui recouvre la totalité de la largeur de la couche de protection 413 de façon à être en contact avec les flancs conducteurs. Dans cet exemple la bandelette conductrice 7 suit un trajet que l'on peut qualifier de radial puisque ses bords les plus longs sont parallèles aux renforts de l'armature de carcasse 5 qui dans le cas présent est radiale.

Sur la figure 3 on a représenté une vue de côté du pneu de la figure 1 sur laquelle on voit les positions des régions de liaison 412A, 413A, 40A respectivement des principales couches de renfort, de la bande de roulement ainsi que la position de la bande conductrice 7.

La bandelette conductrice est placée dans un secteur angulaire à 90 degrés par rapport à la soudure de la bande de roulement 40 et par rapport à la région de soudure de la dernière couche de protection 413 de l'armature de sommet 41 et se trouve être diamétralement opposée à la deuxième couche de travail 412. La région d'aboutage des extrémités de la première couche de travail 411 se trouve être localisée sur la même référence angulaire que la région de soudure 40A de la bande de roulement.

Dans une autre variante montrée avec la figure 4, la bandelette conductrice 7 est disposée de manière à avoir ses longs bords non alignés avec les renforts radiaux de l'armature de carcasse 5. L'angle de pose de la bandelette conductrice 7 est ici de l'ordre de 15 degrés (angle mesuré avec la direction transversale ou axiale).

Dans une variante de l'invention, les flancs sont non conducteurs. Dans ce cas, la bandelette conductrice 7 est prolongée dans les flancs 3 pour assurer une continuité entre l'insert conducteur 6 formé dans la bande de roulement et les matériaux des bourrelets en contact avec la jante.

## Revendications

1. Pneu (1) destiné à être monté sur une roue et à porter une charge, comprenant :
- une zone de sommet (4) comprenant une armature de sommet (41) surmontée radialement à l'extérieur par une bande de roulement (40), cette bande de roulement (40) ayant une surface extérieure (400), dite surface de roulement, destinée à venir en contact avec la chaussée, cette bande de roulement (40) étant formée dans au moins un matériau non conducteur de l'électricité et comprenant des moyens conducteurs (6) pour assurer la conduction de l'électricité dans toute l'épaisseur de la bande de roulement, l'armature de sommet comprenant une pluralité de couches (411, 412, 413) superposées les unes aux autres,
- deux bourrelets (2) destinés à assurer le contact entre la roue et le pneu, la partie des bourrelets en contact avec la roue étant conductrice de l'électricité
- des flancs (3) destinés à assurer la liaison entre la zone sommet (4) et les bourrelets (2),
chaque couche de l'armature de sommet (41) est enroulée et comprend deux extrémités dans la direction circonférentielle, ces deux extrémités étant réunies entre elles dans une région d'aboutage pour assurer une bonne tenue mécanique,
la bande de roulement (40) étant enroulée et comprenant deux extrémités dans la direction circonférentielle, ces deux extrémités étant réunies mécaniquement l'une à l'autre par le biais d'une région de soudure oblique formée dans l'épaisseur de la bande, cette région de soudure de la bande de roulement étant décalée circonférentiellement d'un angle de 180 degrés par rapport à la région d'aboutage de la couche de l'armature de sommet (413) radialement la plus à l'extérieur,
ce pneu comprenant au moins une bandelette conductrice (7) d'épaisseur au plus égale à 2 mm et de petite largeur réalisée avec un matériau de nature caoutchoutique conducteur de l'électricité et disposée entre la bande de roulement (40) et l'armature de sommet (41), sur toute la largeur de l'armature de sommet afin de créer un chemin d'écoulement des charges électriques entre les moyens conducteurs formés dans la bande de roulement (40) et les bourrelets (2),
ce pneu étant **caractérisé en ce que** la bandelette conductrice (7) est localisée circonférentiellement de manière à être positionnée à équidistance angulaire entre la région de soudure (40A) de la bande de roulement et la région d'aboutage (413A) de la couche de renforcement radialement la plus à l'extérieur, ces deux régions étant diamétralement opposées.

2. Pneu selon la revendication 1 dans lequel la bandelette conductrice (7) a une épaisseur au plus égale à 1 mm et une largeur égale à au plus deux fois la largeur circonférentielle de la région de soudure (40A) de la bande de roulement (40).

3. Pneu selon la revendication 1 ou la revendication 2 dans lequel la bandelette conductrice (7) est disposée pour être orientée radialement sur toute la largeur de l'armature de sommet (41).

4. Pneu selon la revendication 1 ou la revendication 2 dans lequel la bandelette conductrice (7) est disposée de manière oblique de part et d'autre d'une position circonférentielle à équidistance des régions de soudure (40A) de la bande de roulement et la zone d'aboutage (413A) de la couche de renforcement radialement la plus à l'extérieur cela afin de limiter l'impact de la présence de cette bandelette sur le passage dans le contact avec la chaussée.

5. Pneu selon la revendication 4 dans lequel l'angle d'orientation de la bandelette (7) est au plus égal à 20 degrés.

6. Pneu selon l'une quelconque des revendications 1 à 5 dans lequel l'avant dernière couche de l'armature de sommet (41) est positionnée angulairement de manière à être située diamétralement à l'opposé de la bandelette conductrice (7).

7. Pneu selon l'une quelconque des revendications 1 à 6 dans lequel, l'armature de sommet (41) comprend au moins une couche de renforts de frettage orientés dans la direction circonférentielle ou dans une direction proche de la direction circonférentielle, c'est à dire selon un angle au plus égal à 10 degrés avec la direction circonférentielle, la présence de cette couche de frettage ayant pour effet de limiter l'expansion en direction radiale du sommet du pneu lors de la mise en rotation du pneu et réduire les non uniformités pouvant être générées par la présence d'une bandelette conductrice de petite largeur.

## Patentansprüche

1. Reifen (1), welcher dazu bestimmt ist, auf einem Rad montiert zu werden und eine Last zu tragen, umfassend:
- einen Scheitelbereich (4), der eine Scheitelbewehrung (41) umfasst, die radial außen von einem Laufstreifen (40) überlagert wird, wobei dieser Laufstreifen (40) eine äußere Fläche (400) aufweist, Lauffläche genannt, die dazu bestimmt ist, mit der Fahrbahn in Kontakt zu kommen, wobei dieser Laufstreifen (40) aus wenigstens einem nicht elektrisch leitenden Material ausgebildet ist und leitende Mittel (6) umfasst, um die Leitung der Elektrizität in der gesamten Dicke des Laufstreifens sicherzustellen, wobei die Scheitelbewehrung mehrere übereinander angeordnete Schichten (411, 412, 413) umfasst,
- zwei Wülste (2), die dazu bestimmt sind, den Kontakt zwischen dem Rad und dem Reifen sicherzustellen, wobei der Teil der Wülste, der sich in Kontakt mit dem Rad befindet, elektrisch leitend ist,
- Seitenwände (3), die dazu bestimmt sind, die Verbindung zwischen dem Scheitelbereich (4) und den Wülsten (2) sicherzustellen,
wobei jede Schicht der Scheitelbewehrung (41) in der Umfangsrichtung aufgewickelt ist und zwei Enden umfasst, wobei diese zwei Enden in einem Stoßbereich miteinander vereinigt sind, um eine gute mechanische Haltbarkeit sicherzustellen, wobei der Laufstreifen (40) in der Umfangsrichtung aufgewickelt ist und zwei Enden umfasst, wobei diese zwei Enden über einen schrägen Schweißbereich, der in der Dicke des Streifens ausgebildet ist, mechanisch miteinander vereinigt sind, wobei dieser Schweißbereich des Laufstreifens in Umfangsrichtung um einen Winkel von 180 Grad bezüglich des Stoßbereichs der radial äußersten Schicht (413) der Scheitelbewehrung versetzt ist,
wobei dieser Reifen wenigstens ein leitfähiges Band (7) mit einer Dicke von höchstens 2 mm und von geringer Breite umfasst, das aus einem elektrisch leitenden Material von kautschukartiger Natur hergestellt und zwischen dem Laufstreifen (40) und der Scheitelbewehrung (41) auf der gesamten Breite des Laufstreifens angeordnet ist, um einen Fließweg der elektrischen Ladungen zwischen den im Laufstreifen (40) ausgebildeten leitenden Mitteln und den Wülsten (2) zu erzeugen, wobei dieser Reifen **dadurch gekennzeichnet ist, dass** das leitfähige Band (7) in Umfangsrichtung derart angeordnet ist, dass es in gleichem Winkelabstand zwischen dem Schweißbereich (40A) des Laufstreifens und dem Stoßbereich (413A) der radial äußersten Verstärkungsschicht positioniert ist, wobei diese zwei Bereiche einander diametral gegenüberliegen.

2. Reifen nach Anspruch 1, wobei das leitende Band (7) eine Dicke von höchstens 1 mm und eine Breite, die gleich höchstens dem Zweifachen der Umfangsbreite des Schweißbereichs (40A) des Laufstreifens (40) ist, aufweist.

3. Reifen nach Anspruch 1 oder Anspruch 2, wobei das leitende Band (7) so angeordnet ist, dass es auf der gesamten Breite der Scheitelbewehrung (41) radial ausgerichtet ist.

4. Reifen nach Anspruch 1 oder Anspruch 2, wobei das leitende Band (7) schräg beiderseits einer Umfangsposition angeordnet ist, die sich in gleichem Abstand von den Schweißbereichen (40A) des Laufstreifens und dem Stoßbereich (413A) der radial äußersten Verstärkungsschicht befindet, und zwar um die Auswirkung des Vorhandenseins dieses Bandes auf den Durchlauf im Kontakt mit der Fahrbahn zu begrenzen.

5. Reifen nach Anspruch 4, wobei der Winkel der Ausrichtung des Bandes (7) höchstens gleich 20 Grad ist.

6. Reifen nach einem der Ansprüche 1 bis 5, wobei die vorletzte Schicht der Scheitelbewehrung (41) winkelmäßig so positioniert ist, dass sie sich diametral gegenüber dem leitfähigen Band (7) befindet.

7. Reifen nach einem der Ansprüche 1 bis 6, wobei die Scheitelbewehrung (41) wenigstens eine Schicht aus Versteifungselementen umfasst, die in der Umfangsrichtung oder in einer zur Umfangsrichtung nahen, das heißt mit der Umfangsrichtung einen Winkel von höchstens 10 Grad bildenden Richtung ausgerichtet sind, wobei das Vorhandensein dieser Versteifungsschicht bewirkt, dass die Dehnung des Scheitels des Reifens in radialer Richtung, wenn der Reifen in Rotation versetzt wird, begrenzt wird und dass die Ungleichmäßigkeiten, die durch das Vorhandensein eines leitfähigen Bandes von geringer Breite erzeugt werden können, verringert werden.

## Claims

1. Tyre (1) intended to be mounted on a wheel and to bear a load, comprising:
- a crown zone (4) comprising a crown reinforcement (41) surmounted radially on the outside by a tread (40), this tread having an external surface (400), referred to as the tread surface, intended to come into contact with the roadway, this tread (40) being formed from at least one material that is not a conductor of electricity and comprising conducting means (6) in order to conduct electricity throughout the thickness of the tread, the crown reinforcement comprising a plurality of layers (411, 412, 413) superposed on one another,
- two beads (2) intended to provide contact between the wheel and the tyre, the part of the beads that is in contact with the wheel being a conductor of electricity
- sidewalls (3) intended to provide the connection between the crown zone (4) and the beads (2),
each layer of the crown reinforcement (41) is wound and comprises two ends in the circumferential direction, these two ends being joined together in an abutment region to ensure good mechanical integrity,
the tread (40) being wound and comprising two ends in the circumferential direction, these two ends being mechanically joined together by an oblique weld region formed in the thickness of the tread, this tread weld region being circumferentially offset by an angle of 180 degrees with respect to the region at which the radially outermost layer of the crown reinforcement (413) is butted together,
this tyre comprising at least one conducting strip (7) of a thickness at most equal to 2 mm and of small width made from a material of rubbery nature which is a conductor of electricity and positioned between the tread (40) and the crown reinforcement (41) over the entire width of the crown reinforcement so as to create a flow path for electric charge between the conducting means formed in the tread (40) and the beads (2),
this tyre being **characterized in that** this conducting strip (7) is circumferentially located in such a way as to be positioned at equal angular distances between the tread weld region (40A) and the region (413A) at which the radially outermost reinforcing layer is butted together, these two regions being diametrically opposite.

2. Tyre according to Claim 1, in which the conducting strip (7) has a thickness at most equal to 1 mm and a width equal to at most twice the circumferential width of the weld region (40A) of the tread (40).

3. Tyre according to Claim 1 or Claim 2, in which the conducting strip (7) is positioned in such a way as to be oriented radially across the entire width of the crown reinforcement (41).

4. Tyre according to Claim 1 or Claim 2, in which the conducting strip (7) is positioned obliquely on either side of a circumferential position equidistant from the tread weld regions (40A) and the zone of abutment (413A) of the radially outermost reinforcing layer, the purpose of that being to limit the impact that the presence of this strip has in the contact patch in which the tread is in contact with the roadway.

5. Tyre according to Claim 4, in which the angle at which the conducting strip (7) is oriented is at most equal to 20 degrees.

6. Tyre according to any one of Claims 1 to 5, in which the penultimate layer of the crown reinforcement (41) is angularly positioned so as to be situated diametrically opposite the conducting strip (7).

7. Tyre according to any one of Claims 1 to 6, in which the crown reinforcement (41) comprises at least one layer of hoop reinforcers oriented in the circumferential direction or in a direction close to the circumferential direction, namely at an angle at most equal to 10 degrees to the circumferential direction, the presence of this hoop layer having the effect of limiting the expansion of the crown of the tyre in the radial direction as the tyre rotates and of reducing nonuniformities that could be generated by the presence of a narrow conducting strip (7).
